# EUROPÄISCHE PATENTSCHRIFT

(11) **EP 3 765 227 B1**
(45) Veröffentlichungstag und Bekanntmachung des Hinweises auf die Patenterteilung: **10.07.2024**
(21) Anmeldenummer: 19712550.3
(22) Anmeldetag: 14.03.2019
(51) Int. Cl.: B23K 9/28, B23K 9/29

(54) **SCHWEISSBRENNER**
WELDING TORCH
TORCHE DE SOUDAGE

(30) Priorität: 14.03.2018 DE 102018105888
(43) Veröffentlichungstag der Anmeldung: 20.01.2021
(73) Patentinhaber: Quäckber, Jörg, 4926 DA Lage Zwaluwe (NL)
(72) Erfinder: Quäckber, Jörg, 4926 DA Lage Zwaluwe (NL)
(74) Vertreter: Göring, Jan
(86) Internationale Anmeldenummer: PCT/EP2019/056480
(87) Internationale Veröffentlichungsnummer: WO 2019/175345

(56) Entgegenhaltungen:
- EP-A1- 1 520 650
- WO-A1-2012/045107
- CH-A- 284 148
- DE-A1- 2 631 742
- DE-A1- 2 705 759
- DE-B- 1 113 528
- DE-B1- 2 619 177
- DE-U1- 202016 102 971

## Beschreibung

Die Erfindung betrifft einen Schweißbrenner mit einem Düsenstock zum Aufnehmen eines Kontaktrohres und einer Gasdüse insbesondere zum MIG/MAG-Schutzgasschweißen, einen Brennerhalter und ein flexibles, rohrförmiges Verbindungselement, das den Düsenstock und den Brennerhalter miteinander verbindet.

Ein Schweißbrenner mit einem flexiblen Rohrbogen ist beispielsweise vom WO 2012/045107 A1 bekannt. Der Rohrbogen umfasst eine Vielzahl umeinander gewundener Kupferkabel oder -röhren zur Stromleitung sowie zur Formgebung und Stabilisation des Rohrbogens. Mit den bekannten Schweißbrennern kann bei luftgekühlten, flexiblen Schweißen praktisch nur in den Niedrig-Energiebereich mit kontinuierlichen Schweißvorgängen gearbeitet werden, das heißt bei einem Schweißdraht-Durchmesser von 0,8 mm oder weniger und einem Schweißstrom von 60 A oder weniger. Das Kupfermaterial des Rohrbogens leidet unter Ermüdungserscheinungen und bricht erfahrungsgemäß nach einer Anzahl von Biegevorgängen. Solche Anwendungen kommen beispielsweise für den Karosseriebau in Betracht. Hochenergetische Schweißbrenn-Verfahren sind beispielsweise im Schiffsbau oder im Gebäudebau üblich. Für hochenergetische Schweißverfahren beispielsweise im Schiffsbau erfolgen bei Schweißströmen in dem Bereich von etwa 220 A bzw. Schweißdraht-Durchmessern von 1 mm oder 1,2 mm, könnte ein aus WO 2012/045107 A1 bekannter gasgekühlter Schweißbrenner nur für kürzeste Punktschweiß-Vorgänge verwendet werden. Ansonsten überhitzt erfahrungsgemäß die Düse und kann dadurch dauerhaft beschädigt werden, wenn der Schweißdraht an der Düse schmilzt. Bei hochenergetischen Schweißverfahren reicht die Gaskühlung erfahrungsgemäß nicht für eine rasche Abkühlung aus.

EP 1 520 650 A1 betrifft das Lichtbogenschweißen und speziell wassergekühlte Lichtbogenschweißbrenner.

CH 284148 A beschreibt einen handbetätigten Schweißapparat mit einer inneren Fluidumkühlvorrichtung.

DE 26 19 177 B1 betrifft einen Schweiß-, Schneid- Heiz oder Flämmbrenner mit einem die Austrittsdüse(n) enthaltenden Brennerkopf und einem Zuführungen enthaltenden Brennerkörper, wobei ein Teil von Brennerkörper und Brennkopf zur Kühlung des Brennerkopfes von einem konvektive Wärmeübertragung bewirkenden Kühlmedium durchströmt ist.

DE 26 31 742 A1 betrifft ein Schweißwerkzeug zum Elektroschweioen mit einem Kühlmittelkreis, der eine Kühlmittelzuführung in den Wärme erzeugenden und zu kühlenden Bereich und eine Kühlmittelabführung aus diesem aufweist.

DE 20 2016 102971 U1 beschreibt einen Brennerkopf eines Schweißbrenners zum Lichtbogenschweißen. DE 11 13 528 B (Basis für den Oberbegriff des Anspruchs 1) offenbart einen verstellbaren Elektrodenhalter für das Lichtbogenschweißen mit einer biegbaren Wendel als Schweißkopfträger.

Die Verwendung eines flexiblen Verbindungselements erlaubt beim Einsatz eines Schweißbrenners im verwinkelten Bereich die Geometrie des Schweißbrenners an die Erfordernisse der Umgebung anzupassen, d.h. den Düsenstock relativ zum Brennerhalter in einer beliebigen Winkelstellung einzustellen, um bei eingeschränkter Bewegungsmöglichkeit Schweißnähte oder Schweißpunkte gut an gewünschten Stellen zu positionieren. Bei Schweißbrennern mit starrem Verbindungselement zwischen Brennerhalter und Düsenstock ist es regelmäßig erforderlich, den Schweißbrenner mit einer durch das starre Verbindungselement festgelegten Geometrie zur Anpassung an Umgebungsbedingungen durch ein anderes starres Verbindungselement mit anderer Geometrie zu ersetzen, um auf diese Weise eine Anpassung an die räumliche Vorgabe vorzunehmen. Dies ist relativ aufwendig und erhöht den Zeitaufwand und damit die Kosten von Schweißarbeiten.

Es ist eine Aufgabe der Erfindung, die Nachteile des Stands des Technik zu überwinden, insbesondere einen Schweißbrenner mit einem flexiblen Verbindungselement zwischen Düsenstock und Brennerhalter bereitzustellen, bei dem sowohl eine gute flexible Einstellbarkeit des Düsenstocks relativ zum Brennerhalter realisierbar ist, bei dem ein dauerhafter Hochenergiebetrieb beispielsweise mit Schweißdrähten mit einem Durchmesser von 1,0 mm oder mehr und/oder Schweißströmen von 220 A für kontinuierliches Schweißen ermöglicht ist. Diese Aufgabe löst der Gegenstand von Anspruch 1.

Demnach umfasst ein Schweißbrenner einen Düsenstock zum Aufnehmen eines Kontaktrohres und einer Gasdüse insbesondere zum MIG/MAG-Schutzgasschweißen, einen Brennerhalter, und ein flexibles, rohrförmiges Verbindungselement. Das flexible Verbindungselement verbindet den Düsenstock und den Brennerhalter miteinander und ist dazu ausgebildet, eine stabile Position des Düsenstocks sowie vorzugsweise im Düsenstock angeordneter Lichtbogenkomponenten, wie ein Schweißdraht und/oder eine Elektrode, relativ zu dem Brennerhalter einzustellen. Vorzugsweise ist das flexible, rohrförmige Verbindungselement durch ein Panzerrohr, beispielsweise ein RWS Panzerrohr, gebildet. Das Verbindungselement führt eine Drahtführungsseele und/oder den Schweißdraht oder die Elektrode vom Brennerhalter zum Düsenstock. Ferner führt das flexible Verbindungselement einen Kanal zum Leiten von Gas, wie Schutzgas, zur Gasdüse. Außerdem führt das flexible Verbindungselement einen Stromleiter vom Brennerhalter zum Düsenstock.

Erfindungsgemäß führt das flexible Verbindungselement ferner wenigstens eine Leitung für ein Kühlfluid, wie Wasser, vom Brennerhalter zum Düsenstock. Der Düsenstock umfasst einen mit der wenigstens einen Leitung verbunden fluidgekühlten Wärmetauscher. Indem der Düsenstock mit einem fluidgekühlten Wärmetauscher ausgestattet ist, kann ein sichererer Betrieb selbst bei hochenergetischen Schweißvorgängen, beispielsweise bei Schweißströmen von 100 A oder mehr, insbesondere 200 A oder mehr, vorzugsweise etwa 220 A, und/oder unter Verwendung von Schweißdrähten mit einem großen Durchmesser von beispielsweise 1,0 mm, 1,1 mm, 1,2 mm oder mehr, gewährleistet werden. Der erfindungsgemäße Schweißbrenner kann durch die Fluidkühlung schnell von der Betriebstemperatur auf niedrige Temperatur, insbesondere unterhalb 100 °C, abgekühlt werden, damit die Ausrichtung des Düsenstocks relativ zu dem Brennerhalter manuell eingestellt werden kann, beispielsweise um eine Anpassung an eine schweißend zu bearbeitende Geometrie vorzunehmen.

Bei einer erfindungsgemäßen Ausführung eines Schweißbrenners umfasst der fluidgekühlte Wärmetauscher mehrere in Axialrichtung versetzte insbesondere ringförmige Kühlkammern zum Aufnehmen des Kühlfluids. Der am bzw. im Düsenstock angeordnete Wärmetauscher kann zur weiteren Verbesserung der Wärmeübertragung unterteilt sein in einzelne Kühlkammern. Beispielsweise kann die Kühlflüssigkeit von wenigstens einer Leitung in eine erste Kühlkammer und anschließend in eine zweite oder gegebenenfalls weitere Kühlkammer strömen. Die Rückströmung kann von der zweiten oder gegebenenfalls weiteren Kühlkammer durch eine erste Kühlkammer zu wenigstens einer insbesondere anderen Leitung erfolgen. So kann die Verweildauer der Kühlflüssigkeit in dem Wärmetauscher zur Aufnahme von Wärme optimiert werden. Die Axialrichtung der Kühlkammern kann korrespondieren zu einer durch die Lichtbogenkomponenten, wie ein Schweißdraht und/oder eine Elektrode, festgelegten Axialrichtung.

Gemäß einer erfindungsgemäßen Ausführung eines Schweißbrenners ist zwischen zwei unmittelbar axial benachbarten Kühlkammern eine insbesondere ringscheibenförmige Trennwand vorzugsweise aus einem Metall, wie Kupfer oder Aluminium, vorgesehen. Falls mehr als zwei axial benachbarte Kühlkammern vorgesehen sind, können entsprechend mehr als eine Trennwand zwischen je zwei unmittelbar benachbarten Kühlkammern vorgesehen sein. Die Trennwand insbesondere aus einem gut wärmeleitenden Material, vorzugsweise einem Metall oder einer Metalllegierung, erhöht die zur Wärmeübertragung bereitstehende Fläche des Wärmetauschers zur Abgabe von Wärme an das Kühlfluid und verbessert so die Wärmeübertragung in dem Wärmetauscher.

Gemäß einer erfindungsgemäßen Ausführung des Schweißbrenners umfasst die wenigstens eine Trennwand je wenigstens einen Durchlass zur Kommunikation axial benachbarter Kühlkammern. Alternativ oder zusätzlich kann die jeweilige Trennwand in einer relativ zu der Axialrichtung geneigten Ebene ausgerichtet sein, wobei insbesondere mehrere Trennwände des Wärmetauschers raumparallel zu einander angeordnet sind. Vorzugsweise erstreckt sich die wenigstens eine Trennwand in Radialrichtung bzw. quer zur Axialrichtung vorzugsweise vollumfänglich bis an eine Innenseite einer Außenwand des Wärmetauschers. Durchlässe durch benachbarte Trennwände können insbesondere in Radialrichtung und/oder in Umfangsrichtung zu einander versetzt oder fluchtend angeordnet sein. Eine schräge Anordnung der wenigstens einen Trennwand relativ zu der Axialrichtung erhöht die Wärmeaufnahme des Kühlfluids in dem Wärmetauscher, wobei überraschenderweise die Verbesserung größer ist als durch die größere Wärmeaustauschfläche alleine zu erwarten war.

Gemäß einer erfindungsgemäßen Ausführung eines Schweißbrenners weist der Wärmetauscher an seinem von dem Lichtbogen abgewandten, vorzugsweise diametral entgegengesetzten, Ende wenigstens einen Anschluss für die wenigstens eine Leitung auf.

Der Anschluss kann zur vollständig geschützten Aufnahme der Leitung im Bereich des rohrförmigen, flexiblen Verbindungselements vorgesehen sein. Eine Leitung oder eine Leitungsverlängerung kann durch den Anschluss ins Innere des Wärmetauschers führen. Alternativ oder zusätzlich umfasst die wenigstens eine Leitung eine Kühlfluidzuführleitung zum Versorgen des Wärmetauschers mit frischem Kühlfluid und eine Kühlfluidabführleitung zum Entfernen von im Wärmetauscher erwärmten Kühlfluid, wobei die wenigstens eine Leitung als Schlauch insbesondere aus Kunststoff ausgebildet ist und/oder innerhalb des Verbindungselements aufgenommen ist. Vorzugsweise kann ein Kunststoffschlauch mit einer Wärmebeständigkeit über 200 °C vorgesehen sein, insbesondere ein Kunststoffschlauch für einen Temperaturbereich von 285 °C bis 320 °C. Beispielsweise kann ein temperaturbeständiger Kunststoffschlauch auf Polyethylen-Basis verwendet werden. Vorzugsweise ist der Schlauch brandfest und/oder wärmefest. Es hat sich entgegen bestehender Vorurteile überraschenderweise gezeigt, dass ein solcher Schlauch trotz der noch sehr viel höheren Schweißtemperaturen bei einem erfindungsgemäßen Schweißbrenner dauerhaft sicher eingesetzt werden kann.

Gemäß einer bevorzugten Ausführung eines Schweißbrenners umfasst der Wärmetauscher ein Gehäuse insbesondere aus einem vorzugsweise gut wärmeleitenden Metall, wie Messing, wobei insbesondere das Gehäuse außenseitig zumindest abschnittsweise mit Kühlrippen versehen ist. Bei Verwendung eines Wärmetauschers mit Kühlkammern und Trennwänden können sich die wenigstens eine Kühlkammer und/oder gege benenfalls die wenigstens eine Trennwand bis unmittelbar an die Innenseite des Gehäuses erstrecken. Es ist denkbar, dass das Gehäuse innenseitig zumindest abschnittsweise mit wenigstens einer Innenrippe ausgestattet ist. Vorzugsweise kann die Außenhaut des Düsenstocks zumindest Teilweise durch das Gehäuse gebildet sein. Im Vergleich zu anderen Materialien, beispielsweise Aluminium, hat sich Messing als vorteilhaft erwiesen, weil es relativ hart und widerstandsfähig gegen mechanische Einflüsse ist und eventuelle unbeabsichtigte Schweißpunkte bzw. Schweißperlen von Messing gut entfernbar sind.

Gemäß einer Weiterbildung umfasst das Gehäuse einen sich in Axialrichtung erstreckenden Topfabschnitt, der eine Umfangswand und eine dem Lichtbogen zugewandten Bodenwand um den kühlfluidführenden Innenraum, insbesondere die wenigstens eine Kühlkammer, des Wärmetauschers bildet. Vorzugsweise weist das Gehäuse eine, insbesondere genau eine, vom Lichtbogen abgewandte Öffnung auf. Insbesondere weist das Gehäuse einen Verschlussabschnitt zum Verschließen der Öffnung auf. Die wenigstens eine Leitung erstreckt sich bevorzugt zu dem Verschlussabschnitt des Gehäuses. Der Verschlussabschnitt kann vorzugsweise radial innen und/oder außen an dem Topfabschnitt lösbar befestigt sein.

Gemäß einer Weiterbildung bildet insbesondere der Verschlussabschnitt den wenigstens einen Anschluss für die wenigstens eine Leitung. Alternativ oder zusätzlich können die Drahtführungsseele und/oder der Schweißdraht oder die Elektrode, der Kanal sowie der Stromleiter vorzugsweise mittig und/oder koaxial durch den Verschlussabschnitt geführt sein. Insbesondere kann der Verschlussabschnitt ein Außengewinde aufweisen, das in ein Innengewinde des Topfabschnitts einschraubbar ist.

Gemäß einer Weiterbildung des Schweißbrenners ist das Gehäuse in Axialrichtung gestuft in wenigstens einen vorderen Düsenbefestigungsabschnitt mit einem ersten Außendurchmesser, an den die Gasdüse montierbar, insbesondere aufsteckbar, ist, und einen hinteren Verbinderbefestigungsabschnitt mit einem zweiten Außendurchmesser, an den das Verbindungselement montierbar, insbesondere aufschraubbar, ist. Vorzugsweise ist der zweite Außendurchmesser größer als der erste Außendurchmesser.

Gemäß einer bevorzugten Ausführung eines Schweißbrenners sind in dem Brennerhaltcr ein Adapterstück zum Zusammenführen eines Versorgungsstromleiters, eines Gasversorgungskanals und der Drahtführungsseele und/oder den Schweißdrahtes oder der Elektrode zu einer gemeinsamen Versorgungsverbindung vom Brennerhalter zum Düsenstock angeordnet. Insbesondere umfasst der Adapter eine elektrisch leitfähige Verbindung zu dem Kühlfluid in der wenigstens einen Leitung umfasst. So kann eine Erdung mittels des Kühlfluids realisiert sein.

Weitere Eigenschaften, Merkmale und Vorteile der Erfindung werden durch die folgende Beschreibung bevorzugter Ausführungen der Erfindung anhand der beiliegenden Zeichnungen deutlich, in denen zeigen:
- Fig. 1: eine schematische Querschnittsansicht eines erfindungsgemäßen Schweißbrenners;
- Fig. 2: eine schematische, perspektivische Ansicht des Schweißbrenners gemäß Fig. 1;
- Fig. 3: eine andere perspektivische Ansicht des Schweißbrenners gemäß Fig. 1;
- Fig. 4: ein Verbindungsstück eines Schweißbrenners beispielsweise gemäß Fig. 1;
- Fig. 5: eine schematische Querschnittsansicht des Wärmetauschers eines Schweißbrenners beispielsweise gemäß Fig. 1;
- Fig. 6: eine Detailansicht einer Trennplatte in dem Wärmetauscher gemäß Fig. 5;
- Fig. 7: eine perspektivische Ansicht einer Befestigungskomponente des Brennerhalters für einen Schweißbrenner beispielsweise gemäß Fig. 1;
- Fig. 8: ein Adapterstück für den Schweißbrenner beispielsweise gemäß Fig. 1; und
- Fig. 9: schematische Darstellungen von erfindungsgemäßen Schweißbrennern mit den unterschiedlichen Richtungen in gebogenen Verbindungselementen.

Ein erfindungsgemäßer Schweißbrenner wird im Folgenden im Allgemeinen mit dem Bezugszeichen 1 bezeichnet. Der erfindungsgemäße Schweißbrenner 1 umfasst als seine Hauptbestandteile einen Düsenstock 3, einen Brennerhalter 7 und ein flexibles, rohrförmiges Verbindungselement 5. Das Verbindungsstück 5 verbindet den Düsenstock 3 und den Brennerhalter 7 miteinander. Das Verbindungselement 5 ist dazu ausgebildet, eine einstellbare Position des Düsenstocks 3 relativ zu dem Brennerhalter 7 stabil zu halten. Der Düsenstock 3 dient zum Aufnehmen eines Kontaktrohres 31 und einer Gasdüse 33 zum Schweißen beispielsweise zum MIG/MAG-Schutzgasschweißen. Vorzugsweise können in dem Düsenstock Lichtbogenkomponenten, wie ein Schweißdraht und/oder eine Elektrode, vorgesehen sein.

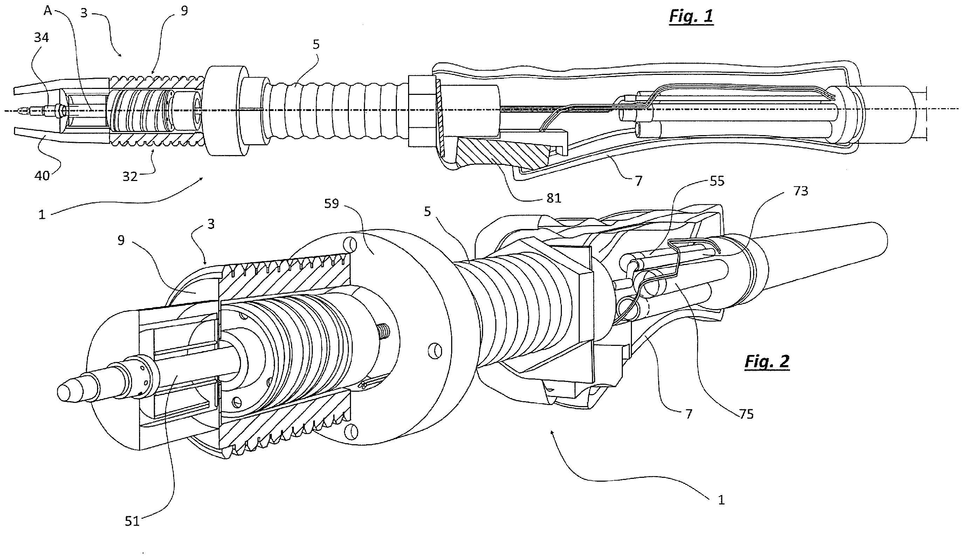

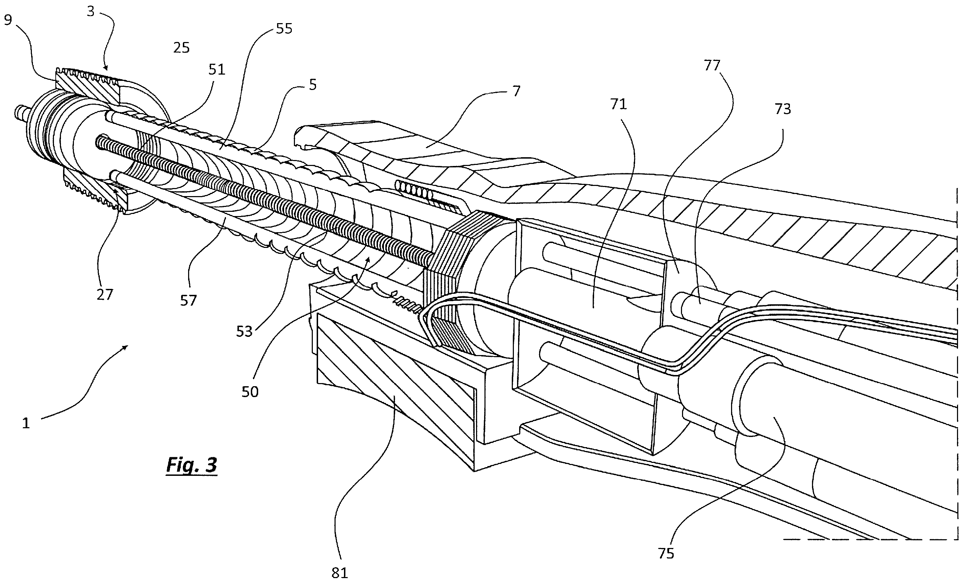

Fig. 1 bis 3 zeigen unterschiedliche schematische Darstellungen des erfindungsgemä-βen Schweißbrenners 1, wobei in der Fig. 3 auch das rohrförmige Verbindungselement 5 in einer Schnittdarstellung gezeigt ist. In Fig. 3 ist zu erkennen, dass das Verbindungselement 5 mehrere Kanäle, Leitungen, etc. von dem Brennerhalter 7 zu dem Düsenstock 3 führt. In dem Verbindungselement 5, das beispielsweise als RWS Panzerrohr gebildet sein kann, kann eine Drahtführungsseele und/oder der Schweißdraht oder die Elektrode des Schweißbrenners geführt sein. In dem Verbindungselement 5 kann ein Kanal 51 zum Leiten von Gas, insbesondere Schutzgas, zu der Gasdüse 33 untergebracht sein. In dem Verbindungselement 5 ist ferner ein Stromleiter 53, hier in Form einer Umwändelung des Kanals 51, vorgesehen, welche vom Brennerhalter 7 zum Düsenstock 3 geführt ist.

Ferner ist in dem Verbindungselement 5 eine Kühlfluidzuführleitung 55 zum Versorgen des Wärmetauschers 9 im Düsenstock 3 mit frischem Kühlfluid vorgegeben. In dem Verbindungselement 5 ist ferner eine Kühlfluidabführleitung 57 zum Entfernen von in dem Wärmetauscher 9 gewärmten Kühlfluid vorgesehen. Das Kühlfluid kann beispielsweise Wasser, insbesondere destilliertes Wasser, vorgesehen sein. Der Düsenstock 3 des Schweißbrenners 1 umfasst einen fluidgekühlten Wärmetauscher 9, auf dem im Folgenden im Detail eingegangen wird.

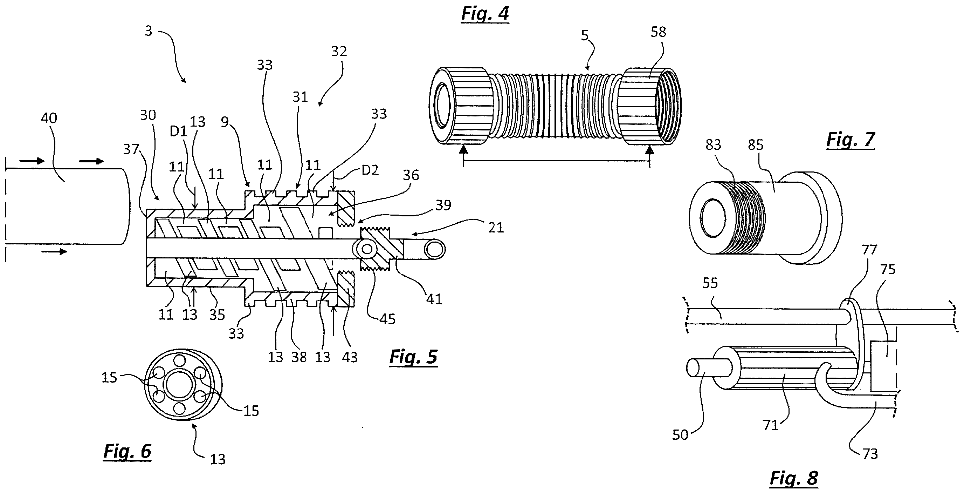

Der Benutzer des Schweißbrenners 1 kann diesen Brennerhalter 7 mit einer Hand halten und über den Betätigungsknopf 81 aktivieren und/oder deaktivieren. An dem vorderen Ende des Brennerhalters 7 ist das flexible, rohrförmige Verbindungselement 5 lösbar befestigt, beispielsweise festgeschraubt. Die Verschraubung oder andere Befestigung des Verbindungselements 5 an dem Brennerhalter 7 kann beispielsweise durch Aufschrauben einer Gewindebuchse 58 des Verbindungselements 5 gemäß Fig. 4 über das Gewinde 83 am in Axialrichtung vorderen Ende des Befestigungsstutzes 85 erfolgen. Der Befestigungsstutzen 85 kann hülsenförmig mit einer inneren lichten Weite gebildet sein, durch welche Kanäle, Leitungen, etc. von dem Brennerhalter 7 in das Verbindungselement 5 ragen können.

Am vorderen Ende, das heißt am im Betrieb des Schweißbrenners lichtbogenseitigen Ende, ist der Düsenstock 3 an dem flexiblen, rohrförmigen Verbindungselement 5 befestigt. Der Düsenstock 3 kann zu diesem Zweck beispielsweise mit einem Gewinde oder einer Flanschverbindung ausgestaltet sein. An dem rückseitigen, das heißt lichtbogenfernen, Ende des Düsenstocks 3 kann ein Befestigungsadapter zum Anbringen des vorderen Endes des Verbindungselements 5 vorgesehen sein. Im Bereich des Befestigungsadapters kann eine Funktionskomponente, beispielsweise eine ringförmige Leuchtquelle 59 vorgesehen sein. Eine ringförmige Leuchtquelle kann beispielsweise umfänglich rund um den Düsenstock 3 angeordnete Lampen, beispielsweise LED-Lampen umfassen, um den schweißend zu bearbeitenden Bereich zu beleuchten. Es sei klar, dass ein Beleuchtungselement 55 eine andere Form als ringförmig aufweisen kann, beispielsweise kastenförmig, stabförmig oder hufeisenförmig, und an dem Düsenstock 3 und/oder dem Verbindungselement 5 auf unterschiedliche Weise angeordnet werden kann, beispielsweise durch axiale Anspannung zwischen Verbindungselement 5 und dem Düsenstock 3, durch radiales Aufstecken, gegebenenfalls mit Unterstützung einer Schnappverbindung, einer magnetischen Halterung, oder dergleichen. Die elektrische Versorgung des Beleuchtungselements 59 kann durch eine integrierte Batterie realisiert sein.

Der Düsenstock 3 umfasst ein Kontaktrohr 31 und eine das Kontaktrohr 34 umgebende Gasdüse, insbesondere zum MIG/MAG. Die Gasdüse 38 wird mit Gas, insbesondere Schutzgas, versorgt durch einen Kanal 51 zum Leiten von Gas. Das Gas tritt aus dem Kanal 51 im Bereich einer Gasverteilung aus, die von in dem hülsenartigen, sich in Axialrichtung A führenden Zylinderring umgeben wird, der die Gasdüse 40 bildet.

In Axialrichtung A hinter dem Kontaktrohr 34 bzw. der Gasdüse 40 ist der Wärmetauscher 9 vorgesehen. Der Wärmetauscher 9 ist im Detail in Fig. 5 gezeigt.

Der Wärmetauscher 9 hat ein topfartiges Gehäuse 31, welche einen bzw. mehrere dicht geschlossene Aufnahmehohlräume für das Kühlfluid bilden. In Axialrichtung A durch das topfartige Gehäuse 31 hindurch erstreckt sich ein Durchgang für den Kanal 51 zum Leiten von Gas sowie die Drahtführungsseele und/oder den Schweißdraht oder die Elektrode des Schweißbrenners 1, wie auch für den Stromleiter 53. Insofern könnte das Gehäuse 31 auch als Gugelhupf-förmig bezeichnet sein.

Das Gehäuse 31 umfasst einen sich in Axialrichtung erstreckenden Topfabschnitt 35, welcher einen Hohlraum zum Aufnehmen von Kühlfluid bildet. Der Hohlraum ist realisiert durch eine in Axialrichtung vordere Bodenwand 37, eine in Radialrichtung innere Wand, welche den Kanal 51 bzw. den Stromleiter 53 radial außen umgibt, und eine radial äußere Wand, welche vorzugsweise durch die Außenwand des Gehäuses 31 gebildet ist. Die Außenwand des Gehäuses 31 kann als Umfangswand 38 bezeichnet sein. Der Bodenwand 37 ist bevorzugt dem Lichtbogen zugewandt. Die in Axialrichtung A dem Lichtbogen bzw. der Bodenwand 37 abgewandte Seite des Gehäuses 31 weist eine Öffnung 39 auf. Die Öffnung 39 ist zwischen der radial inneren Wand und der Umfangswand 38 des Gehäuses 31 gebildet und kann insofern als ringförmige Öffnung 39 bezeichnet sein. Das Gehäuse 31 ist vorzugsweise mit einem Verschlussabschnitt 41 zum Verschließen der ringförmigen Öffnung 39 ausgestattet.

Der Verschlussabschnitt 41 weist zwei vorzugsweise zu der Axialrichtung A achsenparallele Anschlüsse 25, 27 für die Kühlmittelzuführleitung 55 und die Kühlfluidabführleitung 57 auf. Die Drahtführungsseele und/oder der Schweißdraht oder die Elektrode, der Gaskanal 51 sowie der Stromleiter 53 werden beispielsweise mit und/oder koaxial durch den Verschlussabschnitt 41 sowie gegebenenfalls den Topfabschnitt 35 des Gehäuses 31 geführt. Der Verschlussabschnitt 41 kann ein Außengewinde 45 und ein Innengewinde aufweisen, das in ein Innengewinde 43 des Topfabschnitts 35 oder ein Außengewinde des Topfabschnitts (nicht näher dargestellt) einschraubbar ist. Die Montage des Verschlussabschnitts 41 an dem Topfabschnitt 35 des Gehäuses 31 erzeugt einen fluiddicht geschlossenen Innenraum 36 zum Aufnehmen von Kühlfluid. Dieser Innenraum 36 wird über die Anschlüsse 25 und 27 und die in den Anschlüssen 25 und 27 steckenden Kühlfluidleitungen 55 und 57 mit frischem Kühlfluid versorgt. Die Versorgung mit Kühlfluid kann beispielsweise taktweise oder kontinuierlich erfolgen. Bei einer kontinuierlichen Frisch-Kühlfluid-Zufuhr kann eine der Leitungen als Kühlfluidzuführleitung 55 vorgesehen sein, durch welches Kühlfluid von einer Kühlfluidquelle in dem Wärmetauscher 9 strömt. Die andere Leitung 57 kann als Kühlfluidabführleitung ausgestaltet sein, durch die erwärmtes Kühlfluid aus dem Innenraum 36 des Wärmetauschers 9 abgezogen wird.

Das Gehäuse 31 ist vorzugsweise aus Messing gebildet. An der Umfangs-Außenseite 38 des Gehäuses 31 können Kühlrippen 33 oder Ähnliches vorgesehen sein. Auf diese Weise kann ein zumindest teilweises Kühlen des Wärmetauschers durch Umgebungsluft und/oder Strahlung erfolgen. Im Innenraum 36 des Wärmetauschers können ebenfalls (nicht näher dargestellte) Kühlrippen vorgesehen sein, um die Kontaktfläche des Gehäuses 31 mit dem darin geführten Kühlfluid zu erhöhen.

Im Innenraum 36 des Wärmetauschers 9 sind in Axialrichtung A versetzte Kühlkammern 11 zum Aufnehmen des Kühlfluids realisiert. Die Kühlkammern sind hier exemplarisch durch eingesetzte ringscheibenförmige Trennwände 13 voneinander getrennt. Die Trennwände sind vorzugsweise aus einem Metall, wie Kupfer oder Aluminium, gebildet. Es ist denkbar, die Trennwände 13 entsprechend der Außenseite 38 des Gehäuses 31, vorzugsweise ebenfalls aus Messing, zu bilden. Alternativ ist es denkbar, die Kühlkammern 11 durch innere Rippen, beispielsweise innere Ringrippen, des Gehäuses 31 zu realisieren.

Die Trennwände 13 sind im Detail in Fig. 6 abgebildet. Jede Trennwand 13 umfasst wenigstens einen Durchlass 15, hier beispielsweise sechs Durchlässe 15, zur fluidischen Kommunikation axial benachbarter Kühlkammern 11. Die Trennwände 13 sind vorzugsweise in einer geneigten Ebene zur Axialrichtung ausgerichtet, wobei die Ausrichtungsebene senkrecht zur Axialrichtung sein kann oder in einem Winkel von kleiner als 90° zur Axialrichtung, beispielsweise 70°, 60°, 50° oder 45° relativ zu der Axialrichtung aufweisen kann.

Der Wärmetauscher 9 gemäß Fig. 5 umfasst kaskadenartig in fluidischer Verbindung stehende benachbarte Kühlkammern 11. Durch die schräge Anordnung der Trennwände 13 im Innenraum 36 des Gehäuses 31 haben die einzelnen Kühlkammern 11 im Wesentlich eine schräge Zylinderform, deren Flachseite relativ zu der Axialrichtung A geneigt ist in einem Winkel entsprechend dem Neigungswinkel der Ebene der Trennwände 13.

Die Wärmequelle des Schweißbrenners 1 ist im Wesentlichen der Lichtbogen, welcher in Axialrichtung A am vorderen Ende des Schweißbrenners 1 entsteht. Die Wärmeausstrahlung infolge des Lichtbogens verläuft somit im Wesentlichen entgegen der Axialrichtung A. An dem jeweiligen in Axialrichtung A vorderen Enden der jeweiligen Kühlkammer 11 herrscht eine größere Temperatur vor als an dem in Axialrichtung hinteren Ende der Kühlkammern 11. In den schrägen Kühlkammern 11 wie auch in den schrägen Trennwänden 13 liegt folglich ein axialer Temperaturgradient vor. Dieser Temperaturgradient wird durch den Wärmetauscher 9 zur Übertragung der Hitze von dem Gehäuse 31 und den Trennwänden 13 auf das Kühlfluid ausgenutzt. Gleichzeitig fördert der Temperaturgradient die Bewegung des Kühlfluids innerhalb der Kammern 11 wie auch von einer Kammer 11 zu der/den jeweiligen benachbarten Kammer(n) 11. Daher kann es überraschenderweise genügen, die Leitungen 55 und 57 mit der in Axialrichtung hintersten Kammer 11 in unmittelbarer fluidischer Verbindung zu stellen. Es ist jedoch auch denkbar, wenigstens eine der Kühlfluidleitungen, vorzugsweise die Kühlfluidzuführleitung 55, in eine in Axialrichtung näher am Lichtbogen liegende, z.B. zweite, dritte, vierte oder vorderste, Kühlfluidkammer 11 zu führen, so dass das frische Kühlfluid in einer anderen Kammer und vorzugsweise einer heißeren Kammer zugeführt wird, als der vorzugsweise hinteren Kammer 11, aus welcher das erwärmte Kühlfluid durch die Kühlfluidabführleitung 57 entfernt wird.

Der Wärmetauscher 9 hat einen in Axialrichtung A gestuften Körper. Der vordere Bereich des Gehäuses 31 bildet einen Düsenbefestigungsabschnitt 30, an dem der sich verjüngende zylindrische Körper der Gasdüse 40 montierbar, insbesondere aufsteckbar, beispielsweise verpressbar, ist. Ferner umfasst das Gehäuse 31 einen in Axialrichtung hinteren Verbinderbefestigungsabschnitt 32, an dem das Verbindungselement 5 beispielsweise mit einer Schraubverbindung, befestigbar ist. Beispielsweise kann der Verbinderabschnitt 32 mit einem Außengewinde, einer Bajonett-Verbindung oder dergleichen ausgestaltet sein, und das vordere Ende des Verbindungselements 5 kann mit einer komplementären Verbinderkomponente, wie einem Innengewinde oder einem Bajonett-Gegenverschluss, gebildet sein.

Der in Axialrichtung A vordere Düsenbefestigungsabschnitt 30 weist einen Außendurchmesser D1 auf, der sich von dem hinteren Außendurchmesser D2 des Verbinderbefestigungsabschnitts 32 unterscheidet. Der zweite Außendurchmesser D2 des Verbinderbefestigungsabschnitts 32 ist größer als der vordere, erste Außendurchmesser D1 des Düsenbefestigungsabschnitts 30. Der erste Durchmesser D1 kann zum Aufnehmen einer Düsenkörperhülse bemessen sein. Der zweite Außendurchmesser D2 des Verbinderbefestigungsabschnitts 32 kann beispielsweise einem Standardgewinde, vorzugsweise einem metrischen Standardgewinde, insbesondere einem M22-, M24-, M28-, M30- oder M36-Gewinde, entsprechen.

Falls das Gehäuse 31 außenumfänglich mit Kühlrippen 33 oder dergleichen ausgestattet ist, können diese im Wesentlichen denselben Außendurchmesser oder einen kleineren und/oder größeren Außendurchmesser als der Verbinderbefestigungsabschnitt 32 aufweisen. Bevorzugt ist der Außendurchmesser im Bereich eventuell vorhandener Kühlrippen 33 größer als der erste Außendurchmesser D1.

Zwischen dem ersten Außendurchmesser D1 und dem zweiten Außendurchmesser D2 kann sich eine im Wesentlichen in Radialrichtung quer, vorzugsweise orthogonal, zu der Axialrichtung A erstreckende Schulter als Gegenanschlag für den Düsenkörper 40 vorgesehen sein. Die Dicke der Umfangswand 38 des Gehäuses 31 kann relativ klein und im Wesentlichen konstant sein, beispielsweise im Bereich zwischen 1,5 mm und 5 mm, beispielsweise im Bereich zwischen 2 mm und 2,25 mm liegen. Die Umfangswand 38 des Gehäuses 31 kann sowohl in dem Abschnitt des Gehäuses mit einem kleineren Außendurchmesser D1 als auch im Bereich eines größeren Außendurchmessers D2 im Wesentlichen gleich groß sein. Auf diese Weise können im Innenraum 36 des Gehäuses 31 unterschiedlich radial breite Kühlkammern 11 realisiert sein.

Im Inneren des als Handgriff ausgestalteten Brennerhalters 7 ist ein Adapterstück 71 vorgesehen. Das Adapterstück 71 dient zum Zusammenführen eines Versorgungsstromleiters, eines Gasversorgungskanals 73 und der Drahtführungsseele 75 und/oder des Schweißdrahtes oder der Elektrode zu einer gemeinsamen Versorgungsverbindung 50. Die gemeinsame Versorgungsverbindung 50 erstreckt sich vom Brennerhalter 7 bis zum Düsenstock 3 vorzugsweise koaxial durch das Verbindungselement 5.

An dem Adapter 71 kann auch mindestens eine der Leitungen 55 und 57 für das Kühlfluid verbunden sein. Beispielsweise kann die Kühlfluidzuführleitung 55 oder die Kühlfluidabführleitung 57 durch eine elektrisch leitfähige Verbindung 77, beispielsweise in Form eines metallischen Montageauges, in Verbindung mit dem Adapterstück 71 stehen. Das Kühlfluid kann über die Verbindung 77 mit dem Adapter 71 mit einem leitenden Kontakt verbunden sein, wobei sich ein kühlfluidführender Kanal abschnittsweise in elektrischer Verbindung mit dem Verbindungsstück 77 befindet. Beispielsweise kann eine Kunststoffleitung bis hin zu dem metallischen Auge des Verbindungsstücks 77 geführt sein, dort befestigt sein und in Axialrichtung anschließend wiederum an einem anderen Kunststoffschlauch angesteckt sein, welche die weite Kühlfluidzuführleitung 55 bildet.

Die Kühlfluidleitungen 55 und 57 werden durch den Brennerhalter 7 und durch die lichte Weite des Befestigungsstutzens 85 ins Innere des Verbindungselements 5 geführt. Ebenso wird durch die lichte Weite des Befestigungsstutzens 85 auch die gemeinsame Versorgungsverbindung 50 ins Innere des Verbindungselements 5 geführt. Im Inneren des Verbindungselements 5 erstreckt sich die gemeinsame Versorgungsleitung 50 wie auch die Kühlfluidleitungen 55 und 57 bis hin zu dem Düsenstock 3.

Ein Schwanenhals, Wellrohr oder ein RWS-Panzerrohr umgibt und umhüllt vollumfänglich in Axialrichtung entlang der gesamten Erstreckung von dem Brennerhalter 7 zum Düsenstock 3 die gemeinsame Versorgungsleitung 50 wie auch die Kühlfluidleitungen 55 und 57. Da die Drahtführungsseele und/oder der Schweißdraht oder die Elektrode, der Gaskanal 51 und der Stromleiter 53 Teil der gemeinsamen Versorgungsverbindung 5 bilden, schützt das rohrförmige Verbindungselement 5 die Versorgung des Düsenstocks 3 vor äußeren Einflüssen. Für die gemeinsame Versorgungsleitung 50 oder die einzelnen Komponenten können flexible Teile verwendet werden. Ebenso können für die Kühlfluidleitungen 55 und 57 flexible Komponenten, beispielsweise ein Kunststoffschlauch insbesondere aus Polyethylen verwendet werden. Die Komponenten, die im Inneren des Verbindungselements 5 verwendet werden, sollen brandfest und/oder wärmefest sein.

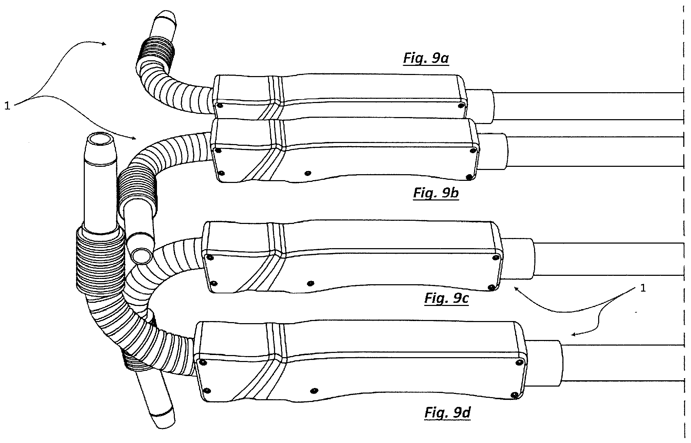

Das Verbindungselement 5 stellt zumindest weitgehend die mechanische Stabilität bereit, um den Düsenstock 3 in eine gewünschte Position relativ zu dem Brennerhalter 7 zu positionieren, welche dann beibehalten wird. Die Steifigkeit des rohrförmigen Verbindungselements 5 kann konstruktiv vorbestimmt sein. Vorzugsweise ist die Steifigkeit (bzw. die Flexibilität) des rohrförmigen Verbindungselements 5 derart gewählt, dass ein manuelles Verbiegen des Verbindungselementes vorzugsweise ohne Werkzeug eine gewünschte Stelle des Düsenstocks 3 relativ zu dem Brennerhalter 7 bewirken kann, wie beispielsweise in der Fig. 9a-d dargestellt. Vorzugsweise soll eine Einstellbarkeit eines Winkels des Düsenstocks 3 relativ zu dem Brennerhalter 7 von wenigstens 30°, wenigstens 60°, wenigstens 90°, wenigstens 120° oder wenigstens 150° gestattet sein. Die Ausrichtung des Düsenstocks relativ zu dem Brennerhalter 7 kann in beliebiger Radialrichtung erfolgen. Relativ zu dem Betätigungsknopf 81 oder einer anderen Referenzstelle am Brennerhalter 7 soll der Düsenstock 3 beispielsweise in dieselbe Radialrichtung (nach unten gemäß Fig. 9c), die entgegengesetzte Radialrichtung (nach oben gemäß Fig. 9d) oder in einer queren Radialrichtung (nach rechts gemäß Fig. 9a; oder nach links gemäß Fig. 9b) ausrichtbar sein.

Der Düsenstock 3 kann auch, wie in den Fig. 1 bis 3 dargestellt, koaxial zu dem Brennerhalter 7 ausgerichtet sein. Die notwendige Betätigungskraft zum plastischen Ändern der Ausrichtung des Düsenstocks 3 relativ zum Brennerhalter 7 soll vorzugsweise eine Mindestkraft von 5 Newton, 10 Newton, 15 Newton oder 20 Newton erfordern. Auf diese Weise kann sichergestellt sein, während des Schweißens durch unbeabsichtigten Kontakt zwischen Düsenstock 3 und einem Objekt im Bereich des zu schweißenden Objekts keine unerwünschten plastischen Verformungen des Verbindungselementes 5 erfolgt. Die plastische Verformung des Verbindungselements 5 ist vorzugsweise reversibel.

Die in der vorstehenden Beschreibung, den Figuren und den Ansprüchen offenbarten Merkmale können sowohl einzeln als auch in beliebiger Kombination für die Realisierung der in den angehängten Ansprüchen definierten Erfindung in verschiedenen Ausgestaltungen von Bedeutung sein.

### Bezugszeichenliste

- 1: Schweißbrenner
- 3: Düsenstock
- 5: Verbindungselement
- 7: Brennerhalter
- 9: Wärmetauscher
- 11: Kühlkammern
- 13: Trennwand
- 15: Durchlass
- 25, 27: Anschlüsse
- 30: Düsenbefestigungsabschnitt
- 31: Gehäuse
- 32: Verbinderbefestigungsabschnitt
- 33: Kühlrippe
- 34: Kontaktrohr
- 35: Topfabschnitt
- 36: Innenraum
- 37: Bodenwand
- 40: Gasdüse
- 38: Umfangswand
- 39: Öffnung
- 41: Verschlussabschnitt
- 43: Innengewinde
- 45: Außengewinde
- 50: Versorgungsverbindung
- 51: Kanal
- 53: Stromleiter
- 55: Kühlfluidzuführleitung
- 57: Kühlfluidabführleitung
- 58: Gewindebuchse
- 59: Leuchtquelle
- 71: Adapterstück
- 73: Gasversorgungskanal
- 75: Drahtführungsseele
- 77: Verbindungsstück
- 81: Betätigungsknopf
- 83: Gewinde
- 85: Befestigungsstutzen

- A: Axialrichtung
- D1, D2: Außendurchmesser

## Patentansprüche

1. Schweißbrenner (1), umfassend einen Düsenstock (3) zum Aufnehmen eines Kontaktrohres (34) und einer Gasdüse (40) insbesondere zum MIG/MAG-Schutzgasschweißen, einen Brennerhalter (7), und ein flexibles, rohrförmiges Verbindungselement (5), das den Düsenstock (3) und den Brennerhalter (7) miteinander verbindet und das dazu ausgebildet ist, eine stabile Position des Düsenstocks (3) sowie vorzugsweise im Düsenstock (3) angeordneter Lichtbogenkomponenten, wie ein Schweißdraht und/oder eine Elektrode, relativ zu dem Brennerhalter (7) einzustellen, wobei das Verbindungselement (5) eine Drahtführungsseele und/oder den Schweißdraht oder die Elektrode, einen Kanal (51) zum Leiten von Gas, wie Schutzgas, zur Gasdüse (40) sowie einen Stromleiter (53) vom Brennerhalter (7) zum Düsenstock (3) führt, wobei
das Verbindungselement (5) ferner wenigstens eine Leitung (55, 57) für ein Kühlfluid, wie Wasser, vom Brennerhalter (7) zum Düsenstock (3) führt, wobei der Düsenstock (3) einen mit der wenigstens einen Leitung (55, 57) verbunden fluidgekühlten Wärmetauscher (9) umfasst, und der Wärmetauscher (9) an seinem von dem Lichtbogen abgewandten Ende (21) wenigstens einen Anschluss (25, 27) für die wenigstens eine Leitung (55, 57) aufweist, **dadurch gekennzeichnet, dass**
die wenigstens eine Leitung (55, 57) als Schlauch aus Kunststoff ausgebildet ist und der Wärmetauscher (9) mehrere in Axialrichtung (A) versetzte Kühlkammern (11) zum Aufnehmen des Kühlfluids umfasst, wobei zwischen zwei unmittelbar axial benachbarten Kühlkammern (11) eine Trennwand (13) vorgesehen ist, die wenigstens einen Durchlass (15) zur Kommunikation axial benachbarter Kühlkammern (11) umfasst.

2. Schweißbrenner (1) nach Anspruch 1, **dadurch gekennzeichnet, dass** der fluidgekühlte Wärmetauscher (9) mehrere ringförmige Kühlkammern (11) umfasst, wobei die Trennwand (13) ringscheibenförmig ist.

3. Schweißbrenner (1) nach Anspruch 1 oder 2, **dadurch gekennzeichnet, dass** die Trennwand (13) aus einem Metall, wie Kupfer oder Aluminium, vorgesehen ist.

4. Schweißbrenner (1) nach einem der vorstehenden Ansprüche, **dadurch gekennzeichnet, dass** die Trennwand (13) in einer relativ zu der Axialrichtung (A) geneigten Ebene ausgerichtet ist, wobei insbesondere mehrere Trennwände (13) des Wärmetauschers (9) raumparallel zu einander angeordnet sind.

5. Schweißbrenner nach einem der vorstehenden Ansprüche, **dadurch gekennzeichnet, dass** die wenigstens eine Leitung eine Kühlfluidzuführleitung (55) zum Versorgen des Wärmetauschers (9) mit frischem Kühlfluid und eine Kühlfluidabführleitung (57) zum Entfernen von im Wärmetauscher (9) erwärmten Kühlfluid umfasst.

6. Schweißbrenner nach einem der vorstehenden Ansprüche, **dadurch gekennzeichnet, dass** die wenigstens eine Leitung (55, 57) innerhalb des Verbindungselements (5) aufgenommen ist.

7. Schweißbrenner nach einem der vorstehenden Ansprüche, **dadurch gekennzeichnet, dass** der Wärmetauscher (9) ein Gehäuse (31) insbesondere aus einem vorzugsweise gut wärmeleitenden Metall, wie Messing, umfasst.

8. Schweißbrenner nach Anspruch 7, **dadurch gekennzeichnet, dass** das Gehäuse (31) außenseitig zumindest abschnittsweise mit Kühlrippen (33) versehen ist.

9. Schweißbrenner nach Anspruch 7 oder 8, **dadurch gekennzeichnet, dass** das Gehäuse (31) einen sich in Axialrichtung (A) erstreckenden Topfabschnitt (35), der eine Umfangswand (38) und eine dem Lichtbogen zugewandten Bodenwand (37) um den kühlfluidführenden Innenraum (36) des Wärmetauschers (9) bildet, und eine vom Lichtbogen abgewandte Öffnung (39) aufweist, und einen Verschlussabschnitt (41) zum Verschließen der Öffnung (39) aufweist.

10. Schweißbrenner nach Anspruch 9, **dadurch gekennzeichnet, dass** der Verschlussabschnitt (41) den wenigstens einen Anschluss (25, 27) bildet.

11. Schweißbrenner nach einem der Ansprüche 7 bis 8, **dadurch gekennzeichnet, dass** die Drahtführungsseele und/oder der Schweißdraht oder die Elektrode, der Kanal (51) sowie der Stromleiter (53) vorzugsweise mittig und/oder koaxial durch den Verschlussabschnitt (41) geführt werden und/oder dass der Verschlussabschnitt (41) ein Außengewinde (45) aufweist, das in ein Innengewinde (43) des Topfabschnitts (35) einschraubbar ist.

12. Schweißbrenner nach einem der Ansprüche 7 bis 9, **dadurch gekennzeichnet, dass** das Gehäuse in Axialrichtung (A) gestuft ist in wenigstens einen vorderen Düsenbefestigungsabschnitt (30) mit einem ersten Außendurchmesser (D₁), an den die Gasdüse (40) montierbar, insbesondere aufsteckbar, ist, und einen hinteren Verbinderbefestigungsabschnitt (32) mit einem zweiten Außendurchmesser (D₂), an den das Verbindungselement (5) montierbar, insbesondere aufschraubbar, ist, wobei der zweite Außendurchmesser (D₂) größer als der erste Außendurchmesser (D₁) ist.

13. Schweißbrenner nach einem der vorstehenden Ansprüche, **dadurch gekennzeichnet, dass** in dem Brennerhalter (7) ein Adapterstück (71) zum Zusammenführen eines Versorgungsstromleiters, eines Gasversorgungskanals (73) und der Drahtführungsseele (75) und/oder den Schweißdrahtes oder der Elektrode zu einer gemeinsamen Versorgungsverbindung (50) vom Brennerhalter (7) zum Düsenstock (3) angeordnet ist.

## Claims

1. Welding torch (1), comprising a nozzle stock (3) for receiving a contact tube (34) and a gas nozzle (40), in particular for MIG/MAG protective gas welding, a torch holder (7), and a flexible, tubular connecting element (5) which connects the nozzle stock (3) and the torch holder (7) to one another and which is designed to set a stable position of the nozzle stock (3) and preferably also of arc components, such as a welding wire and/or an electrode, which are arranged in the nozzle stock (3), relative to the torch holder (7), wherein the connecting element (5) leads a wire guide core and/or the welding wire or the electrode, a duct (51) for conducting gas, such as protective gas, to the gas nozzle (40), and leads an electrical conductor (53) from the torch holder (7) to the nozzle stock (3), wherein
the connecting element (5) furthermore leads at least one line (55, 57) for a cooling fluid, such as water, from the torch holder (7) to the nozzle stock (3), wherein the nozzle stock (3) comprises a fluid-cooled heat exchanger (9) which is connected to the at least one line (55, 57), and the heat exchanger (9) has at least one connection (25, 27) for the at least one line (55, 57) at its end (21) facing away from the arc, **characterized in that**
the at least one line (55, 57) is configured as a polymer tube, and the heat exchanger (9) comprises a plurality of cooling chambers (11), which are offset in the axial direction (A), for receiving the cooling fluid, wherein a partition wall (13) is provided between two directly axially adjacent cooling chambers (11), which partition wall comprises at least one passage (15) for the communication of axially adjacent cooling chambers (11).

2. Welding torch (1) according to Claim 1, **characterized in that** the fluid-cooled heat exchanger (9) comprises a plurality of annular cooling chambers (11), wherein the partition wall (13) is annular disk-shaped.

3. Welding torch (1) according to Claim 1 or 2, **characterized in that** the partition wall (13) is provided from a metal, such as copper or aluminium.

4. Welding torch (1) according to one of the preceding claims, **characterized in that** the partition wall (13) is oriented in a plane which is inclined relative to the axial direction (A), wherein in particular a plurality of partition walls (13) of the heat exchanger (9) are arranged spatially parallel to one another.

5. Welding torch according to one of the preceding claims, **characterized in that** the at least one line comprises a cooling fluid supply line (55) for supplying the heat exchanger (9) with fresh cooling fluid and a cooling fluid discharge line (57) for removing cooling fluid which is heated in the heat exchanger (9).

6. Welding torch according to one of the preceding claims, **characterized in that** the at least one line (55, 57) is accommodated within the connecting element (5).

7. Welding torch according to one of the preceding claims, **characterized in that** the heat exchanger (9) comprises a housing (31), in particular from a preferably highly heat-conducting metal, such as brass.

8. Welding torch according to Claim 7, **characterized in that** the housing (31) is provided on the outside at least in sections with cooling ribs (33).

9. Welding torch according to Claim 7 or 8, **characterized in that** the housing (31) includes a pot section (35) which extends in the axial direction (A), and which forms a circumferential wall (38) and a bottom wall (37) facing the arc, which surround the cooling-fluid-conducting interior (36) of the heat exchanger (9), and further includes an opening (39) facing away from the arc, and a closure section (41) for closing the opening (39).

10. Welding torch according to Claim 9, **characterized in that** the closure section (41) forms the at least one connection (25, 27).

11. Welding torch according to one of Claims 7 to 8, **characterized in that** the wire guide core and/or the welding wire or the electrode, the duct (51) and the electrical conductor (53) are guided, preferably centrally and/or coaxially, through the closure section (41), and/or **in that** the closure section (41) includes an external thread which can be screwed into an internal thread (43) of the pot section (35).

12. Welding torch according to one of Claims 7 to 9, **characterized in that** the housing is stepped in the axial direction (A) into at least one front nozzle fastening section (30) having a first external diameter (D1), on which the gas nozzle (40) can be mounted, in particular plugged, and a rear connector fastening section (32) having a second external diameter (D2), on which the connecting element (5) can be mounted, in particular screwed, wherein the second external diameter (D2) is greater than the first external diameter (D1).

13. Welding torch according to one of the preceding claims, **characterized in that** an adapter piece (71) for bringing together a supply current conductor, a gas supply duct (73) and the wire guide core (75) and/or the welding wire or the electrode to form a common supply connection (50) from the torch holder (7) to the nozzle stock (3) is arranged in the torch holder (7).

## Revendications

1. Chalumeau de soudage (1), comprenant un porte-buse (3) destiné à recevoir un tube de contact (34) et une buse à gaz (40), en particulier pour le soudage MIG/MAG sous gaz protecteur, un support de chalumeau (7), et un élément de liaison (5) flexible, tubulaire, qui relie le porte-buse (3) et le support de chalumeau (7) l'un à l'autre et qui est réalisé pour régler une position stable du porte-buse (3) ainsi que de préférence des composants d'arc électrique disposés dans le porte-buse (3), tels qu'un fil de soudage et/ou une électrode, par rapport au support de chalumeau (7), l'élément de liaison (5) conduisant une âme de guidage de fil et/ou le fil de soudage ou l'électrode, un canal (51) pour conduire du gaz, tel que du gaz protecteur, vers la buse à gaz (40) ainsi qu'un conducteur de courant (53) du support de chalumeau (7) vers le porte-buse (3),
l'élément de liaison (5) conduisant en outre au moins une conduite (55, 57) pour un fluide de refroidissement, tel que de l'eau, du support de chalumeau (7) vers le porte-buse (3), le porte-buse (3) comprenant un échangeur de chaleur (9) refroidi par fluide, relié à l'au moins une conduite (55, 57), et l'échangeur de chaleur (9) présentant au niveau de son extrémité (21) opposée à l'arc électrique au moins un raccord (25, 27) pour l'au moins une conduite (55, 57), **caractérisé en ce que**
l'au moins une conduite (55, 57) est réalisée sous forme de tuyau en plastique et l'échangeur de chaleur (9) comprend plusieurs chambres de refroidissement (11) décalées dans la direction axiale (A) pour recevoir le fluide de refroidissement, une paroi de séparation (13) étant prévue entre deux chambres de refroidissement (11) directement axialement adjacentes, laquelle comprend au moins un passage (15) pour la communication de chambres de refroidissement (11) axialement adjacentes.

2. Chalumeau de soudage (1) selon la revendication 1, **caractérisé en ce que** l'échangeur de chaleur (9) refroidi par fluide comprend plusieurs chambres de refroidissement (11) de forme annulaire, la paroi de séparation (13) étant en forme de disque annulaire.

3. Chalumeau de soudage (1) selon la revendication 1 ou 2, **caractérisé en ce que** la paroi de séparation (13) est prévue en un métal, tel que du cuivre ou de l'aluminium.

4. Chalumeau de soudage (1) selon l'une quelconque des revendications précédentes, **caractérisé en ce que** la paroi de séparation (13) est orientée dans un plan incliné par rapport à la direction axiale (A), plusieurs parois de séparation (13) de l'échangeur de chaleur (9) étant notamment disposées spatialement parallèlement les unes aux autres.

5. Chalumeau de soudage selon l'une quelconque des revendications précédentes, **caractérisé en ce que** l'au moins une conduite comprend une conduite d'amenée de fluide de refroidissement (55) pour alimenter l'échangeur de chaleur (9) en fluide de refroidissement frais et une conduite d'évacuation de fluide de refroidissement (57) pour évacuer le fluide de refroidissement chauffé dans l'échangeur de chaleur (9).

6. Chalumeau de soudage selon l'une quelconque des revendications précédentes, **caractérisé en ce que** l'au moins une conduite (55, 57) est reçue à l'intérieur de l'élément de raccordement (5).

7. Chalumeau de soudage selon l'une quelconque des revendications précédentes, **caractérisé en ce que** l'échangeur de chaleur (9) comprend un boîtier (31) en particulier en un métal de préférence bon conducteur de chaleur, tel que le laiton.

8. Chalumeau de soudage selon la revendication 7, **caractérisé en ce que** le boîtier (31) est pourvu du côté extérieur au moins en partie d'ailettes de refroidissement (33).

9. Chalumeau de soudage selon la revendication 7 ou 8, **caractérisé en ce que** le boîtier (31) présente une partie de pot (35) s'étendant dans la direction axiale (A), laquelle forme une paroi périphérique (38) et une paroi de fond (37) tournée vers l'arc électrique autour de l'espace intérieur (36) conduisant le fluide de refroidissement de l'échangeur de chaleur (9), et une ouverture (39) opposée à l'arc électrique, et une partie de fermeture (41) pour fermer l'ouverture (39).

10. Chalumeau de soudage selon la revendication 9, **caractérisé en ce que** la partie de fermeture (41) forme l'au moins un raccord (25, 27).

11. Chalumeau de soudage selon l'une quelconque des revendications 7 à 8, **caractérisé en ce que** l'âme de guidage de fil et/ou le fil de soudage ou l'électrode, le canal (51) ainsi que le conducteur de courant (53) sont conduits, de préférence centralement et/ou coaxialement, à travers la partie de fermeture (41) et/ou **en ce que** la partie de fermeture (41) présente un filetage extérieur qui peut être vissé dans un filetage intérieur (43) de la partie de pot (35).

12. Chalumeau de soudage selon l'une quelconque des revendications 7 à 9, **caractérisé en ce que** le boîtier est étagé dans la direction axiale (A) en au moins une partie de fixation de buse avant (30) avec un premier diamètre extérieur (D1), sur laquelle la buse à gaz (40) peut être montée, en particulier enfichée, et une partie de fixation de connecteur arrière (32) avec un deuxième diamètre extérieur (D2), sur laquelle l'élément de connexion (5) peut être monté, en particulier vissé, le deuxième diamètre extérieur (D2) étant supérieur au premier diamètre extérieur (D1).

13. Chalumeau de soudage selon l'une quelconque des revendications précédentes, **caractérisé en ce qu'**une pièce d'adaptateur (71) est disposée dans le support de chalumeau (7) pour réunir un conducteur de courant d'alimentation, un canal d'alimentation en gaz (73) et l'âme de guidage de fil (75) et/ou le fil de soudage ou l'électrode pour former une connexion d'alimentation commune (50) du support de chalumeau (7) au support de buse (3).
